# EUROPEAN PATENT SPECIFICATION

(11) **EP 3 218 218 B1**
(45) Date of publication and mention of the grant of the patent: **16.10.2019**
(21) Application number: 14827880.7
(22) Date of filing: 12.11.2014
(51) Int. Cl.: B60K 15/05, B60J 5/06

(54) **A SLIDING DOOR STOPPER**
STOPPER FÜR SCHIEBETÜR
BUTÉE DE PORTE COULISSANTE

(43) Date of publication of application: 20.09.2017
(73) Proprietor: Tofas Türk Otomobil Fabrikasi Anonim Sirketi, Osmangazi/Bursa (TR)
(72) Inventor: GURSOY, Okan, Osmangazi/Bursa (TR); KUCUKOGLU, Ayca, Osmangazi/Bursa (TR)
(74) Representative: Dericioglu Kurt, Ekin
(86) International application number: PCT/TR2014/000421
(87) International publication number: WO 2016/076803

(56) References cited:
- EP-A1- 0 531 179
- EP-A2- 0 913 285
- DE-A1-102006 028 119
- US-A- 4 620 744
- US-A- 5 676 416
- US-A1- 2007 257 505
- US-A1- 2010 019 535

## Description

### Field of the Invention

The present invention relates to a sliding door stopper which prevents the sliding door from opening and breaking fuel lid when the fuel lid is open during filling fuel in vehicles with sliding doors.

### Background of the Invention

Sliding door systems are frequently used especially in light commercial vehicles due to the ease of loading goods and objects. Since these sliding doors are moved parallel to the side surface of the vehicle, it is inevitable that they interact with the components existing on the surface of the vehicle. Fuel filling process in vehicles is generally carried out through the fuel lids located on the side surface of the vehicle. The sliding doors in vehicles with sliding doors come over this fuel lids in open position. The sliding doors prevent the fuel lids from opening when they are in open position as well as opening sliding doors while the fuel lid is open causes the sliding door to hit fuel lid. This situation creates dangerous results such the fuel lid breaking, the door and the lid being harmed or the fuel hose getting harmed during filling fuel.

The systems which partially or completely prevent the sliding door from opening when the fuel lid is open are used in order to solve this problem in the state of the art. An obstacle put on the slide mechanism of the sliding door or the door axis comes out and limits the movement of the sliding door upon the fuel lid is opened in these systems. In order to reopen the door, first the fuel lid should be closed and the obstacle mechanism should come to stand-by position, that is the obstacle limiting the movement of the sliding door should be eliminated.

These systems preventing the sliding door from opening are activated when the fuel lid is opened while the sliding door is open. The obstacle that is created is located in closing path of the door in this case and prevents the door from closing. In order to close the door, first the fuel lid should be closed and the obstacle mechanism should come to stand-by position, that is the obstacle limiting the movement of the sliding door should be eliminated. When the sliding door is tried to be closed without closing the fuel lid or eliminating the obstacle, the sliding door hits the obstacle and cannot close, it gets harmed and breaks the obstacle and makes it unusable.

Turkish Patent Document no TR201202342, an application known in the state of the art, discloses a sliding door stopper which prevents the said door to be opened from inside or outside the vehicle while the fuel lid is open in commercial or passenger vehicles wherein the sliding door is used. It comprises a main body on which a bearing hole is formed and a reliance on the said hole, a moving pin with a spring located in the said bearing hole, a latch on which the said spring applies pressure and/or which applies pressure to the spring and which is fixed at the lower end in the axial movement point, and a connection connected with the said latch.

Japanese Patent Document no JP2006348671, another application known in the state of the art, discloses an opening and closing control mechanism for a fuel lid and sliding door system. The mechanism is designed to save a space via the fuel tank and the stopper piece which are interlocked to each other and the opening and closing mechanism on the sliding door and the fuel tank is constituted with a pull-push cable. The stopper piece stops the sliding door and the pull-push cable on the stopper piece in the intermediate section is moved back and forth and opening -closing is performed with a control mechanism installed in the intermediate section. The intermediate section control mechanism comprises housing, a lid slider sliding on the housing, a stopper and a spring mechanism.

United States Patent Document no US4620744A discloses a slide door locking device for vehicles during feeding of fuel to a fuel tank positioned near a slide door, wherein a stopper lever is so pivotally mounted inside a panel of a body, the panel defining the rear end of a door opening, that the front end of the stopper lever may project into the door opening beyond the front end of the panel and engage with a stop member attached to the slide door, and an actuating lever is pivotally disposed to the panel, projecting into a hollow formed in the panel, for a fuel supply inlet, and is coupled to the rear end of the stopper lever via a link member. When the actuating lever is operated during feeding of fuel to a fuel tank, the front end of the stopper lever engages with the stop member of the slide door to prevent it from opening when it is opened. The stopper lever may be biased by a spring to a stop position so that the engage of the stopper lever with the stop member may be disengaged by further pivoting the stopper lever against the spring, thereby opening the slide door even when the fuel is fed to the fuel tank.

These applications used in the present technique cannot provide a sufficient solution for the problem of the stopper piece preventing the sliding door from closing and being damaged upon the fuel lid is opened when the sliding doors are open.

### Summary of the Invention

The objective of the present invention is to provide a sliding door stopper which prevents the sliding door from opening when the fuel lid of the vehicles wherein sliding doors are used is open.

Another objective of the present invention is to provide a sliding door stopper which allows the sliding door being closed in case the fuel lid is opened when the sliding doors of the of the vehicles wherein the sliding door is used are in open position.

### Detailed Description of the Invention

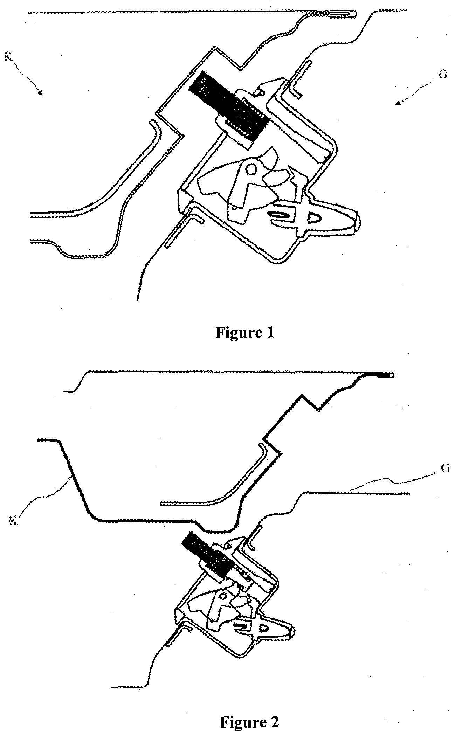

A sliding door stopper developed to fulfill the objectives of the present application is illustrated in the accompanying figures, wherein
Figure 1 is the cross sectional view of correct operation of the sliding door stopper in the state of the art.
Figure 2 is the cross sectional view of erroneous operation of the sliding door stopper in the state of the art.
Figure 3 is the cross sectional view of one embodiment of the inventive sliding door stopper.
Figure 4 is the cross sectional view of another embodiment of the inventive sliding door stopper.

The components shown in the figures are each given reference numbers as follows:
**1.** Sliding door stopper
**2.** Stopper mechanism
**3.** Stopper pin
   **31.** Lower pin
   **32.** Moving upper pin
   **33.** Rotating pin
   **34.** Spring
K. Sliding door
**G.** Vehicle body

The inventive sliding door stopper (1), which allows the sliding door (K) to be closed by being activated upon the fuel lid is opened after the sliding door (K) is opened during fuel filling, essentially comprises
- at least one stopper mechanism (2) which is activated upon the fuel lid is opened, and which is provided between the sliding door (K) and the fuel lid on the vehicle body (G),
- at least one stopper pin (3) which is opened upon the stopper mechanism (2) is activated, and thus prevents the sliding door (K) from opening and also does not prevent the open sliding door (K) from closing.

In the invention, the stopper mechanism (2) detects that the fuel lid is opened and brings the stopper pin (3) to preventing position by being activated according to the information it receives.

In a preferred embodiment of the invention, the stopper mechanism (2) is connected to the fuel lid with a push-pull cable, and it is a system which is activated upon the fuel lid is opened and brings the stopper pin (3) to preventing position.

In another preferred embodiment of the invention, the stopper mechanism (2) detects that the fuel lid is opened via a sensor and brings the stopper pin (3) to preventing position with a drive system.

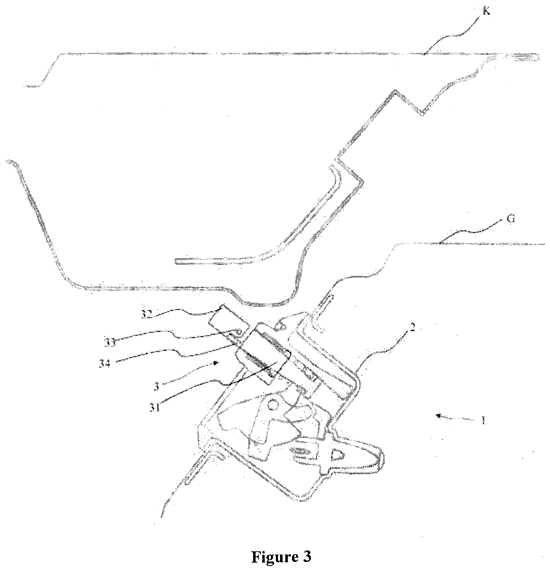

In the invention, the stopper pin (3), which is opened in direction of the sliding door's (K) movement upon the activation of the stopper mechanism (2), has
- at least one lower pin (31) which enables the connection of the stopper pin (3) to the stopper mechanism (2),
- at least one moving upper pin (32) which can be bent such that the stopper pin (3) will not prevent the sliding door (K) in open position from closing,
- at least one rotating pin (33) which enables the connection between the lower pin (31) and the moving upper pin (32) and enables the moving upper pin (32) to rotate around its own axis,
- at least one spring (34) enables the moving upper pin (32) to become its previous vertical state after it is bent by rotating around the rotating pin (33) after the sliding door (K) is closed (Figure 3).

The moving upper pin (32) part of the stopper pin (3) which comes to preventing position upon the fuel lid is opened forms an obstruction for opening the sliding door (K), however it rotates around the axis of the rotating pin (33) and allows the sliding door (K) in open position to close.

In the preferred operating position, the lower pin (31) and the moving upper pin (32) remain parallel to each other by means of the force applied by the spring (34). The moving upper pin (32) can rotate in closing direction of the sliding door (K) only around the rotating pin (33) due to its shape.

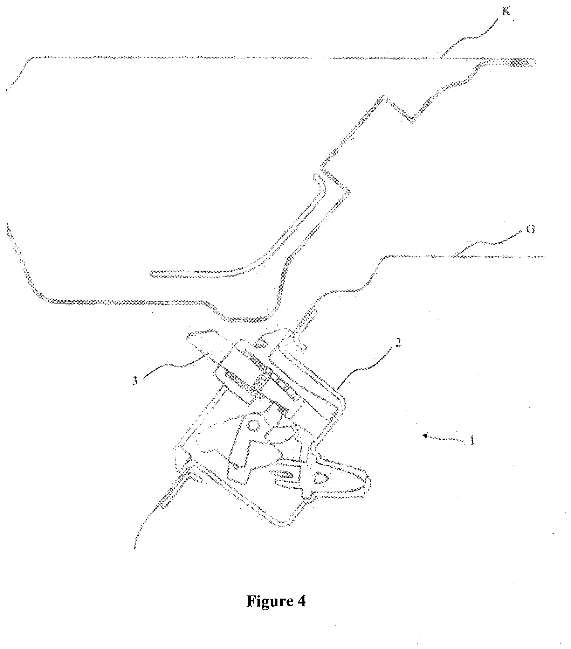

In another embodiment of the invention, the stopper pin (3) has an inclined surface, the sliding door (K) applies force on the inclined surface of the stopper pin (3) when the sliding door (K) is wanted to be closed. The force which is applied has an angular effect since the surface is inclined, and brings the stopper pin (3) with inclined surface from preventing position to closed position. Therefore, the stopper pin (3) having an inclined surface allows the sliding door (K) to be closed without getting harmed while the sliding door (K) is closing (Figure 4).

## Claims

1. A sliding door stopper (1), which allows a sliding door (K) to be closed by being activated upon a fuel lid is opened after the sliding door (K) is opened during fuel filling, **comprising**
- at least one stopper mechanism (2) which is adapted to be provided between the sliding door (K) and the fuel lid on the vehicle body (G), and which is connected to at least one stopper pin (3) wherein the stopper mechanism (2) is adapted to detect that the fuel lid is opened and adapted to bring the stopper pin (3) to a preventing position according to this information to prevent the sliding door (K) from opening **and characterized by** the stopper pin (3) comprising
- at least one lower pin (31) which enables the connection of the stopper pin (3) to the stopper mechanism (2),
- at least one moving upper pin (32) which can be bent such that the stopper pin (3) will not prevent the sliding door (K) in open position from closing,
- at least one rotating pin (33) which enables the connection between the lower pin (31) and the moving upper pin (32) and enables the moving upper pin (32) to rotate around its own axis,
- at least one spring (34) which enables the moving upper pin (32) to become its previous vertical state after it is bent by rotating around the rotating pin (33) after the sliding door (K) is closed.

2. The sliding door stopper (2) according to claim 1, **characterized by** the stopper mechanism (2) which is adapted to be connected to the fuel lid with a push-pull cable, which is activated with the force transferred on the cable upon the fuel lid is opened and brings the stopper pin (3) to preventing position.

3. The sliding door stopper (2) according to claim 1, **characterized by** the stopper mechanism (2) which which is adapted to detect that the fuel lid is opened via a sensor and brings the stopper pin (3) to preventing position with a drive system.

4. The sliding door stopper (1) according to claim 1, **characterized by** the stopper pin (3) which has an inclined surface, on the inclined surface of which force is applied upon the sliding door (K) is closed and thus which comes to the closed position from the preventing position.

## Patentansprüche

1. Schiebetürstopper (1), der das Schließen einer Schiebetür (K) durch Betätigen bei einem Kraftstoffdeckel ermöglicht, nachdem die Schiebetür (K) während der Kraftstoffbefüllung geöffnet wurde, **umfassend**
- mindestens einen Stoppermechanismus (2), der zwischen der Schiebetür (K) und dem Kraftstoffdeckel an der Fahrzeugkarosserie (G) vorgesehen werden kann und der mit mindestens einem Stopperstift (3) verbunden ist wobei der Stoppermechanismus (2) angepasst ist, um zu erfassen, dass der Kraftstoffdeckel geöffnet ist, und angepasst ist, um den Stopperstift (3) gemäß dieser Information in eine Verhinderungsposition zu bringen, um das Öffnen der Schiebetür (K) zu verhindern, **und gekennzeichnet durch** der Stopperstift (3) umfasst
- mindestens einen unteren Stift (31), der die Verbindung des Stopperstiftes (3) mit dem Stoppermechanismus (2) ermöglicht,
- mindestens einen beweglichen oberen Stift (32), der so gebogen werden kann, dass der Stopperstift (3) das Schließen der Schiebetür (K) in geöffneter Position nicht verhindert,
- mindestens einen Drehstift (33), der die Verbindung zwischen dem unteren Stift (31) und dem beweglichen oberen Stift (32) ermöglicht und den beweglichen oberen Stift (32) um seine eigene Achse drehen lässt,
- mindestens eine Feder (34), die es dem beweglichen oberen Stift (32) ermöglicht, nach dem Biegen durch Drehen um den Drehstift (33) nach dem Schließen der Schiebetür (K) in seinen vorherigen vertikalen Zustand zu gelangen.

2. Schiebetürstopper (2) nach Anspruch 1, **gekennzeichnet durch** den Stoppermechanismus (2), der mit einem Push-Pull-Kabel mit dem Kraftstoffdeckel verbindbar ist, das mit der beim Öffnen des Kraftstoffdeckels auf das Kabel übertragenen Kraft aktiviert wird und den Stopperstift (3) in eine Verhinderungsposition bringt.

3. Schiebetürstopper (2) nach Anspruch 1, **gekennzeichnet durch** den Stoppermechanismus (2), der geeignet ist, das Öffnen des Kraftstoffdeckels über einen Sensor zu erfassen und den Stopperstift (3) mit einem Antriebssystem in eine Verhinderungsposition bringt.

4. Schiebetürstopper (1) nach Anspruch 1, **gekennzeichnet durch** den Stopperstift (3), der eine geneigte Fläche aufweist, auf deren geneigte Fläche eine Kraft auf die Schiebetür (K) ausgeübt wird, die geschlossen ist und somit aus der Verhinderungsposition in die geschlossene Position kommt.

## Revendications

1. Butée de porte coulissante (1), qui permet à une porte coulissante (K) d'être fermée en étant activée lors de l'ouverture d'un couvercle de carburant après l'ouverture de la porte coulissante (K) pendant le remplissage de carburant, **comprenant**
- au moins un mécanisme de butée (2) pouvant être prévu entre la porte coulissante (K) et le couvercle du réservoir de carburant sur la carrosserie (G) du véhicule, et qui est relié à au moins une goupille de butée (3), le mécanisme de butée (2) étant adapté pour détecter que le couvercle du réservoir est ouvert et adapté pour amener la goupille de butée (3) dans une position de prévention selon cette information pour empêcher l'ouverture de la porte coulissante (K) **et caractérisé par** la goupille de butée (3) comprenant
- au moins une goupille inférieure (31) qui permet de relier la goupille de butée (3) au mécanisme de butée (2),
- au moins une goupille supérieure mobile (32) qui peut être pliée de telle sorte que la goupille de butée (3) n'empêche pas la porte coulissante (K) de se fermer en position ouverte,
- au moins une goupille rotative (33) qui permet la liaison entre la goupille inférieure (31) et la goupille supérieure mobile (32) et qui permet à la goupille supérieure mobile (32) de tourner autour de son axe propre,
- au moins un ressort (34) qui permet à la goupille supérieur mobile (32) de devenir son état vertical précédent après qu'il a été plié en tournant autour de la goupille rotative (33) après que la porte coulissante (K) est fermée.

2. Butée de porte coulissante (2) selon la revendication 1, **caractérisée par** le mécanisme de butée (2) qui est adapté pour être relié au couvercle du réservoir de carburant par un câble push-pull, qui est activée par la force transférée sur le câble lors de l'ouverture du couvercle du réservoir de carburant et amène la goupille de butée (3) en position de blocage.

3. Butée de porte coulissante (2) selon la revendication 1, **caractérisée par** le mécanisme de butée (2) qui est adapté pour détecter que le couvercle du réservoir de carburant est ouvert par l'intermédiaire d'un capteur et amène la goupille de butée (3) en position d'empêchement avec un système de commande.

4. Butée de porte coulissante (1) selon la revendication 1, **caractérisée par** la goupille de butée (3) qui présente une surface inclinée, sur la surface inclinée de laquelle une force est appliquée sur la porte coulissante (K), est fermée et qui se trouve ainsi en position fermée depuis la position de prévention.
